# EUROPEAN PATENT APPLICATION

(11) **EP 4 389 344 A1**
(43) Date of publication of application: **26.06.2024**
(21) Application number: 22857896.9
(22) Date of filing: 18.08.2022
(51) Int. Cl.: B23P 23/04, B23K 26/36

(54) **LASER AND CUTTING MACHINING APPARATUS**

(30) Priority: 18.08.2021 CN 202110953257
(71) Applicant: Makeblock Co., Ltd., Shenzhen, Guangdong 518000 (CN)
(72) Inventor: SHEN, Changrong, Shenzhen, Guangdong 518000 (CN); WANG, Jianjun, Shenzhen, Guangdong 518000 (CN); WANG, Wenhua, Shenzhen, Guangdong 518000 (CN); LIU, Zhen, Shenzhen, Guangdong 518000 (CN); ZOU, Weihua, Shenzhen, Guangdong 518000 (CN); ZHANG, Youtian, Shenzhen, Guangdong 518000 (CN); XIN, Lijiao, Shenzhen, Guangdong 518000 (CN); SHI, Dongdong, Shenzhen, Guangdong 518000 (CN)
(74) Representative: Patentanwaltskanzlei Matschnig & Forsthuber OG
(86) International application number: PCT/CN2022/113379
(87) International publication number: WO 2023/020587

(57) **Abstract**

A laser and cutting machining apparatus, comprising a laser cutting device (40), the laser cutting device (40) comprising a housing (41), a guide plain shaft (42), and a machining mechanism (50), wherein the guide plain shaft (42) is arranged in the housing (41); and the machining mechanism (50) comprises: a laser shell (51) slidably connected to the guide plain shaft (42), a laser device (52) arranged in the laser shell (51), and a cutter mechanism (55) arranged in the laser shell (51), the laser device (52) and the cutter mechanism (55) being movable with the laser shell (51) along the guide plain shaft (42) relative to the housing (41). The laser and cutting machining apparatus integrates the laser device and the cutter mechanism, is simple and convenient to operate, and can perform laser engraving and cutter cutting on a workpiece by means of a laser or a cutter, thereby achieving the tabletop and miniaturized configuration of the laser and cutting machining apparatus.

## Description

The present application claims priority to Chinese Patent Application No. 202110953257.9, titled "LASER AND CUTTER MACHINING APPARATUS", filed on August 18, 2021 with the China National Intellectual Property Administration, which is incorporated herein by reference in its entirety.

### FIELD

The present application relates to the technical field of engraving and cutting, and in particular to a laser and cutter machining apparatus.

### BACKGROUND

A laser and cutter machining apparatus uses laser as a processing medium to perform machining. Since the laser and cutter machining apparatus is not in direct contact with a workpiece, it is not affected by mechanical motion, and thus the surface of the workpiece is not easily deformed. When a user needs to machine workpieces to produce some complex handicrafts or other works, a conventional laser processing machine is generally required to be used in conjunction with a cutter processing machine. In the process of machining the workpiece by using the laser processing machines and the cutter processing machine, the user usually needs to separately operate the laser processing machine and the cutter processing machine to move up and down to machine the workpiece, leading to complicated operation and the unsatisfactory machining accuracy.

### SUMMARY

In order to solve the above problems, a laser and cutter machining apparatus is provided according to the present application, which can improve machining accuracy.

A laser and cutter machining apparatus is provided according to the present application, which includes a laser and cutter device. The laser and cutter device includes a housing, a guide plain shaft, and a machining mechanism. The guide plain shaft is arranged in the housing. The machining mechanism includes a laser case slidably connected to the guide plain shaft, a laser arranged in the laser case, and a cutter mechanism arranged in the laser case. The laser and the cutter mechanism are configured to move relative to the housing along the guide plain shaft with the laser case.

According to the laser and cutter machining apparatus of the present application, the integration of the laser and the cutter mechanism is realized through the laser case. A workpiece can be machined by using laser light as a processing medium through the laser, and also can be machined by the cutter mechanism, which reduces tool complexity of operating the laser and cutter machining apparatus, so that the operation is simple and convenient. Moreover, the laser and cutter machining apparatus guide the movement of the laser and the cutter mechanism relative to the housing through the guide plain shaft, improving smoothness and accuracy of the movement of the laser and the cutter mechanism relative to the housing, and improving the machining accuracy of the laser and cutter machining apparatus.

### BRIEF DESCRIPTION OF THE DRAWINGS

For more clearly illustrating embodiments of the present application or the technical solutions in the conventional technology, drawings referred to describe the embodiments or the conventional technology will be briefly described hereinafter. Apparently, the drawings in the following description are only some examples of the present application, and for those skilled in the art, other drawings may be obtained based on these drawings without any creative efforts.
Figure 1 is a schematic view of the three-dimensional structure of a laser and cutter machining apparatus according to an embodiment of the present application;
Figure 2 is an exploded view of the three-dimensional structure in Figure 1;
Figure 3 is a schematic view of the three-dimensional structure of a laser and cutter device;
Figure 4 is a partial cross-sectional view taken along line IV-IV in Figure 3;
Figure 5 is an exploded view of the three-dimensional structure in Figure 3;
Figure 6 is a schematic view of the three-dimensional structure of a driving assembly in Figure 5;
Figure 7 is a schematic view of the three-dimensional structure of a machining mechanism in Figure 5;
Figure 8 is an exploded view of the three-dimensional structure in Figure 7;
Figure 9 is a schematic view of the three-dimensional structure of a housing in Figure 5;
Figure 10 is a schematic view of the three-dimensional structure of the housing from another angle;
Figure 11 is a schematic view of the three-dimensional structure of the housing in Figure 10, a machining mechanism, a guide plain shaft, and a driving assembly being assembled;
Figure 12 is a schematic view of the three-dimensional structure of the housing in Figure 10, a machining mechanism, a guide plain shaft, a driving assembly, and a second control board being assembled;
Figure 13 is an exploded view of the three-dimensional structure of the laser and cutter device from another angle;
Figure 14 is an exploded view of the three-dimensional structure of a machining mechanism in Figure 13;
Figure 15 is a top view of the machining mechanism in Figure 13;
Figure 16 is a schematic view of the three-dimensional structure of a second rail device and a laser and cutter device being assembled;
Figure 17 is an exploded view of the three-dimensional structure in Figure 16;
Figure 18 is an enlarged view of part XVIII in Figure 17;
Figure 19 is an exploded view of the three-dimensional structure of a mounting assembly of a second rail device and a laser and cutter device after being assembled;
Figure 20 is a schematic view of the three-dimensional structure of a first rail device;
Figure 21 is an exploded view of the three-dimensional structure in Figure 20;
Figure 22 is an enlarged view of part XXII in Figure 21; and
Figure 23 is a schematic view showing part of a three-dimensional assembly of a first rail device.

### DETAILED DESCRIPTION OF EMBODIMENTS

Technical solutions according to the embodiments of the present application will be described clearly and completely as follows in conjunction with the accompany drawings in the embodiments of the present application. It is obvious that the described embodiments are only a part of the embodiments according to the present application, rather than all of the embodiments. All the other embodiments obtained by those skilled in the art based on the embodiments in the present application without any creative work belong to the scope of protection of the present application.

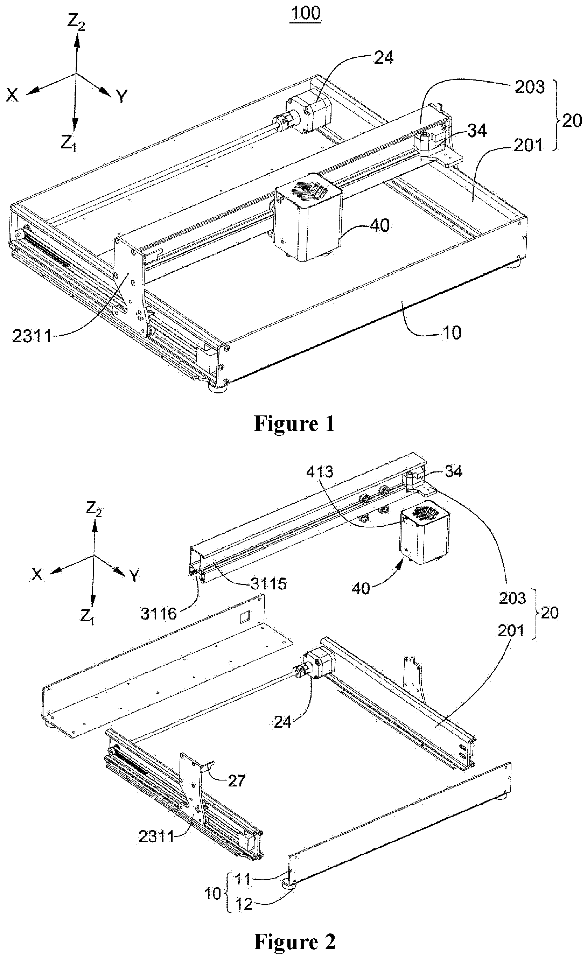

Referring to Figures 1 to 3 together, a laser and cutter machining apparatus 100 for machining workpieces (not shown in the figures) is provided according to the present application. In the present application, the machining of workpieces by the laser and cutter machining apparatus 100 refers to performing operations such as cutting, engraving, or indentation on the workpieces, so that the workpieces after being machined meet the requirements of the user.

The laser and cutter machining apparatus 100 includes a support device 10, a rail device 20, and a laser and cutter device 40. The support device 10 is configured to support the rail device 20 and the laser and cutter device 40. The rail device 20 includes a first rail device 201 and a second rail device 203. The first rail device 201 is fixed to the support device 10. The second rail device 203 is movably arranged on the first rail device 201. The second rail device 203 is configured to move linearly in a first direction (direction Y as shown in Figure 1) on the first rail device 201. The laser and cutter device 40 is movably arranged on the second rail device 203. The laser and cutter device 40 is configured to move linearly in a second direction (direction X as shown in Figures 1 and 2) on the second rail device 203. The first direction is different from the second direction. The laser and cutter device 40 includes a housing 41 movably arranged on the second rail device 203, a guide plain shaft 42 arranged in the housing 41, and a machining mechanism 50. The housing 41 is configured to move linearly in the second direction on the second rail device 203. The machining mechanism 50 is configured to move linearly in a third direction (direction Z1 as shown in Figures 1, 2, and 3) or in a fourth direction (direction Z2 as shown in Figures 1, 2, and 3) relative to the housing 41 on the guide plain shaft 42. The third direction is opposite to the fourth direction; the first direction, the second direction, and the third direction are different from one another; and the first direction, the second direction, and the fourth direction are different from one another. In this embodiment, the number of the first rail devices 201 is two, and the second rail device 203 is arranged on the two first rail devices 201 in a spanning manner. The machining mechanism 50 is configured for machining, the machining mechanism is able to approach the workpiece in the third direction to press against the workpiece, and the machining mechanism 50 is able to move away from the workpiece in the fourth direction. It can be understood that the support device 10 may be omitted.

The laser and cutter machining apparatus 100 may be disassembled into several modules. In particular, each of the first rail device 201, the second rail device 203, and the laser and cutter device 40 can be assembled into a complete module, which minimizes the assembly difficulty and the assembly time for the user, and ensures a good motion performance after the assembly is completed.

The support device 10 includes a support frame 11 and four foot pads 12. The four foot pads 12 are respectively fixed at positions of four corners of the bottom of the support frame 11 for raising the height of the laser and cutter machining apparatus 100. It can be understood that the number of foot pads 12 is not limited in the present application, which may be one or more. It can be understood that in some embodiments, the foot pad assembly 13 may be omitted.

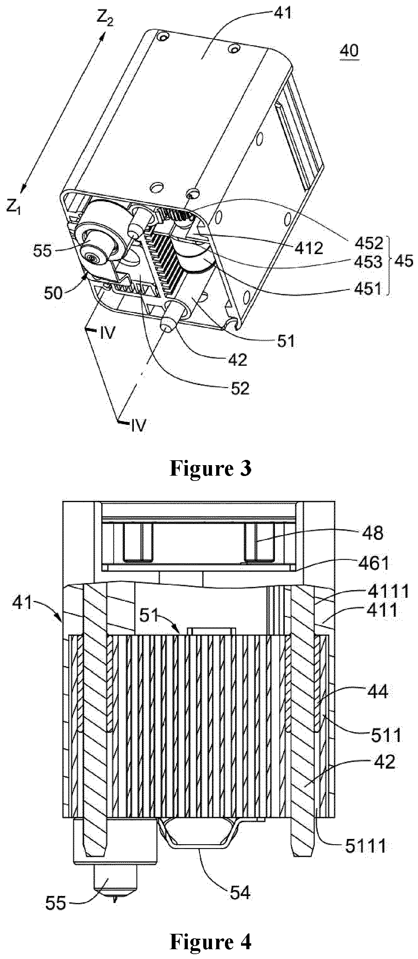

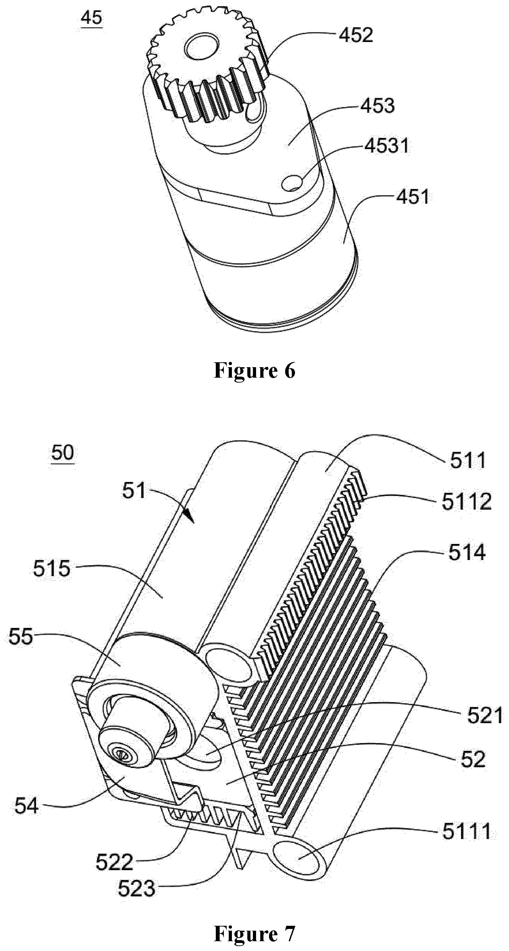

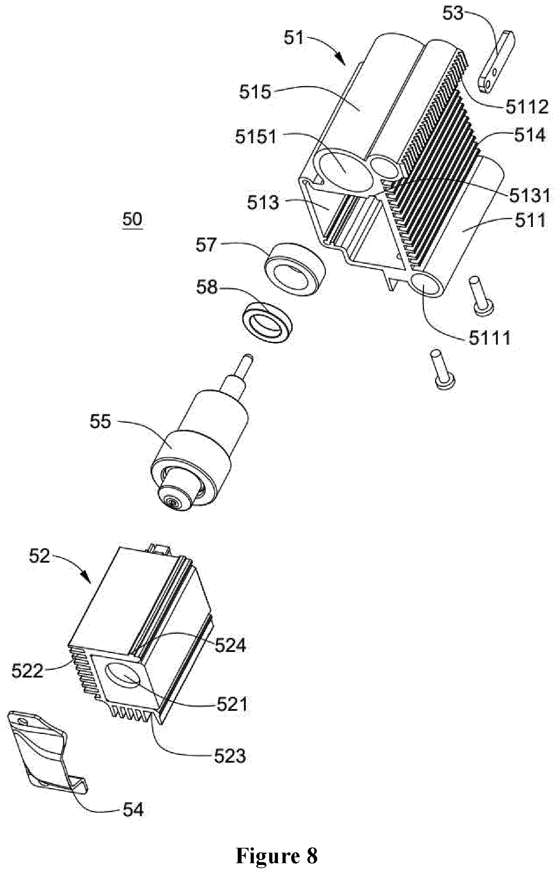

Referring to Figures 3, 4, 5, 7, and 8 together, the laser and cutter device 40 includes the housing 41, the guide plain shaft 42, and the machining mechanism 50. The guide plain shaft 42 is fixedly arranged in the housing 41, and extends in the third direction. The machining mechanism 50 includes a laser case 51, a laser 52 arranged in the laser case 51, and a cutter mechanism 55 arranged in the laser case 51. The laser case 51 is slidably connected to the guide plain shaft 42, and the laser 52 and the cutter mechanism 55 can move, along with the laser case 51, in the third direction or the fourth direction relative to the housing 41. The laser 52 is configured to emit laser light to machine the workpiece.

The laser and cutter device 40 of the laser and cutter machining apparatus 100 integrates the laser 52 and the cutter mechanism 55 through the laser case 51, which not only can use the laser light as the processing medium to machine the workpiece through the laser 52, but also can use the cutter mechanism 55 as the processing medium to machine the workpiece. The tool complexity of operating the laser and cutter machining apparatus 100 is reduced, and the operation is simple and convenient. Moreover, the laser and cutter machining apparatus 100 guides the movement of the laser 52 and the cutter mechanism 55 relative to the housing 41 through the guide plain shaft 42, which improves smoothness and accuracy of the movement of the laser 52 and the cutter mechanism 55 relative to the housing 41, thereby ensuring the movement accuracy of the laser 52 moving towards the workpiece to an appropriate distance for machining the workpiece, and improving the machining accuracy of the laser and cutter device 40.

In the embodiment, the laser 52 may move along with the laser case 51 in the third direction (Z1 as shown in Figure 3) relative to the housing 41 to approach and press against the workpiece. When the laser 52 moves in the third direction relative to the housing such that there is an appropriate distance between the laser 52 and the surface of the workpiece in the third direction, the laser 52 may emit laser light to machine the workpiece. The laser 52 can move along with the laser case 51 in the fourth direction (Z2 as shown in Figure 3) relative to the housing 41 to move away from the workpiece.

In the embodiment, the number of the guide plain shafts 42 is two, and both the axes of the two guide plain shafts 42 are parallel to the third direction, and the two guide plain shafts 42 do not coincide. The laser case 51 moves synchronously on the two guide plain shafts 42 when the laser case 51 moves relative to the housing 41. It can be understood that in another embodiment, the number of the guide plain shaft 42 may be a positive integer which is at least one, such as at one, three or four.

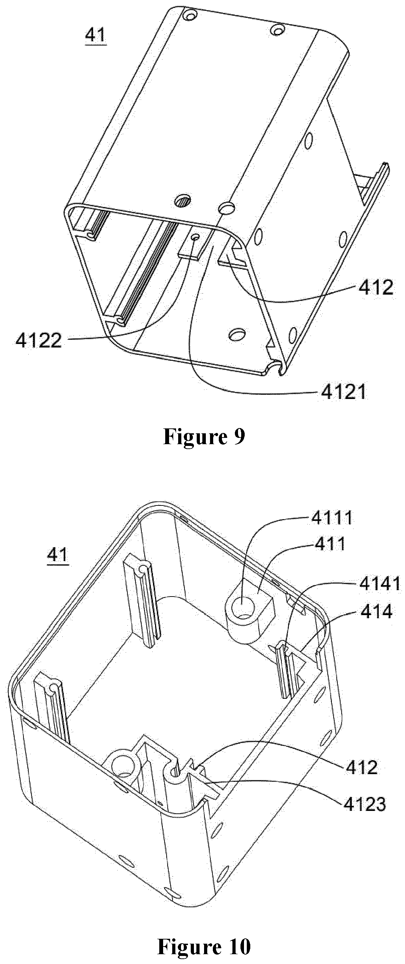

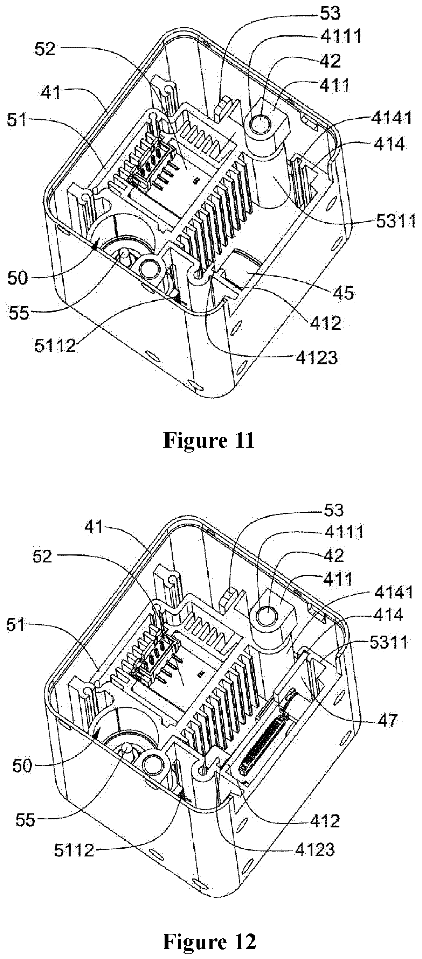

Referring to Figures 3 to 5, 7, 10, and 11 together, the housing 41 is provided with a connecting portion 411 corresponding to the guide plain shaft 42. The connecting portion 411 is provided with a connecting hole 4111, and an end of the guide plain shaft 42 is inserted into the connecting hole 4111. In this way, the guide plain shaft 42 is fixedly connected to the housing 41 through the connecting hole 4111 of the connecting portion 411. The laser case 51 slides on the guide plain shaft 42 in the third direction or the fourth direction, which is equivalent to that, the laser case 51 moves in the third direction or the fourth direction relative to the housing 41. In addition, the connecting portion 411 has a limiting function, that is, the laser case 51 presses against or is in contact with the connecting portion 411 when the laser case 51 slides by a certain distance in the fourth direction on the guide plain shaft 42. At this time, the laser case 51 cannot keep sliding in the fourth direction on the guide plain shaft 42.

In the embodiment, the number of the connecting portions 411 is two, and the two connecting portions 411 are in one-to-one correspondence with the two guide plain shafts 42. Each of the connecting portions 411 is provided with the connecting hole 4111, and the ends of the two guide plain shafts 42 are respectively inserted into the connecting holes 4111 of the corresponding connecting portions 411.

In another embodiment, the number of the connecting portion 411 may be one, and the connecting portion 411 is provided with connecting holes 4111 that are in one-to-one correspondence with the two guide plain shafts 42, the ends of the two guide plain shafts 42 are respectively inserted into the corresponding connecting holes 4111, which is also within the protection scope of the present application.

In the embodiment, the connecting hole 4111 penetrates through two opposite end faces of the connecting portion 411 in the third direction. In another embodiment, the connecting hole 4111 may only penetrate through an end face of the connecting portion 411 facing the laser case 51.

In the embodiment, the connecting portion 411 is arranged in the housing 41, and the laser case 51 may penetrate into the housing 41 along the guide plain shaft 42 inserted in the connecting portion 411. In this way, the laser case 51 can be accommodated in the housing 41, which reduces the overall size of the laser and cutter device 40 and improves space utilization. Of course, the connecting portion 411 may alternatively be arranged outside the housing 41, that is, the laser case 51 cannot be accommodated in the housing 41.

In the embodiment, when the laser case 51 moves in the third direction or the fourth direction along the guide plain shaft 42 in the housing 41, there is a gap between the laser case 51 and an inner wall of the housing 41. In this way, the friction resistance between the laser case 51 and the housing 41 can be minimized when the laser case 51 moves in the third direction or the fourth direction along the guide plain shaft 42 in the housing 41, so that the movement of the laser 52 driven by the laser case 51 is smooth, and the control accuracy is high.

Referring to Figures 3 to 5, 7, and 10 together, the laser case 51 includes a guide portion 511 corresponding to the guide plain shaft 42, the guide portion 511 is provided a guide hole 5111 that penetrates through two opposite end faces of the guide portion 511 in the third direction, and the guide plain shaft 42 is movably inserted in the corresponding guide hole 5111. In this way, the laser case 51 is movable along the guide plain shaft 42 through the guide hole 5111. In this embodiment, the number of the guide portions 511 is two, and the two guide portions 511 are in one-to-one correspondence with the two guide plain shafts 42. Each of the guide portions 511 is provided with the guide hole 5111, and the two guide plain shaft 42 are movably inserted in the guide holes 5111 of the corresponding guide portions 511 respectively. In another embodiment, the number of the guide portion 511 may be one, and the guide portion 511 is provided with two guide holes 5111 that are in one to one correspondence with the two guide plain shafts 42, the two guide plain shafts 42 are movably inserted in the corresponding guide holes 5111, which is also within the protection scope of the present application.

In an embodiment, the laser case 51 is provided with a sleeve 44 fixedly arranged in the guide hole 5111, and the guide plain shaft 42 is movably inserted in the sleeve 44 in the corresponding guide hole 5111. With the sleeve 44, the smoothness and accuracy of the sliding of the guide plain shaft 42 in the guide hole 5111 are improved, and the smoothness and accuracy of the movement of the laser 52 relative to the housing 41 are further improved. Moreover, compared to a solution in which the guide plain shaft 42 is directly inserted in the corresponding guide hole 5111, i.e. no component is provided between the guide plain shaft 42 and the guide hole 5111, the sleeve 44 with a high precision is directly mounted and fixed in the guide hole 5111, which effectively reduces requirements of machining accuracy for the guide hole 5111. That is, the smoothness and accuracy are improved while the machining difficulty and costs are reduced. In this embodiment, the sleeve 44 is a copper sleeve. It can be understood that the sleeve 44 may also be made of other metals or materials.

Referring to Figures 3, 5 to 7, and 9 to 11 together, the laser and cutter device 40 further includes a driving assembly 45. The driving assembly 45 includes a driving member 451 arranged in the housing 41. The driving member 451 is configured to drive the laser case 51 to move along the guide plain shaft 42. In this way, under the action of the driving member 451, the laser case 51 can move in the third direction or the fourth direction relative to the housing 41.

Specifically, an outer peripheral wall of the guide portion 511 is provided with a rack 5112 extending in the third direction. The driving assembly 45 further includes a gear 452 connected to the driving member 451 and engaged with the rack 5112. The driving member 451 drives the gear 452 to rotate, so that the rack 5112 moves in the third direction or the fourth direction relative to the guide plain shaft 42. In this way, the driving member 451 can drive the laser case 51 to move on the guide plain shaft 42 through the engagement between the gear 452 and the rack 5112, so that the laser 52 can move along with the laser case 51 relative to the housing 41.

In this embodiment, the driving member 451 is a motor. The gear 452 is fixedly connected to a rotation shaft of the motor, that is, the gear 452 is fixedly sleeved on the rotation shaft. The gear 452 is coaxial with the rotation shaft. The gear 452 can rotate with the rotation shaft when the rotation shaft of the motor rotates, so that the rack 5112 can move in the third direction or the fourth direction relative to the guide plain shaft 42. When the rotation shaft of the motor does not rotate, the friction force between the gear 452 fixedly connected to the rotation shaft and the rack 5112 can play a locking role, so that the laser case 51 cannot move on the guide plain shaft 42, thereby limiting the movement of the laser case 51 relative to the housing 41. Thus, the position of the laser case 51 on the guide plain shaft 42 is locked.

In this embodiment, the outer peripheral wall of one of the two guide portions 511 is provided with the rack 5112 extending in the third direction, the number of the gear 452 is one, and the gear 452 is correspondingly engaged with the rack 5112. In another embodiment, the outer peripheral wall of each of the two guide portions 511 is provided with the rack 5112 extending in the third direction, the number of the gears 452 is two, the racks 5112 of the two guide portions 511 are correspondingly engaged with the gears 452, which is also within the protection scope of the present application.

In the embodiment, the rotation shaft of the motor (i.e., the driving member 451) is rotationally sleeved with a connecting member 453. The connecting member 453 is connected to the driving member 451, and the connecting member 453 is configured to connect the driving assembly 45 to the housing 41. Specifically, the connecting member 453 is provided with two first through holes 4531; a first fixing portion 412 extending in the third direction is provided in the housing 41, and the first fixing portion 412 is provided with a connecting groove 4121 extending in the third direction, two parts of the first fixing portion 412 respectively located on both sides of the connecting groove 4121 are each provided with a second through hole 4122; and the two second through holes 4122 are in one-to-one correspondence with the two first through holes 4531. The connecting member 453 is fixedly connected to the first fixing portion 412 by the accessories such as screws passing through the first through holes 4531 and the corresponding second through holes 4122, so that the driving member 451 is fixedly connected to the housing 41.

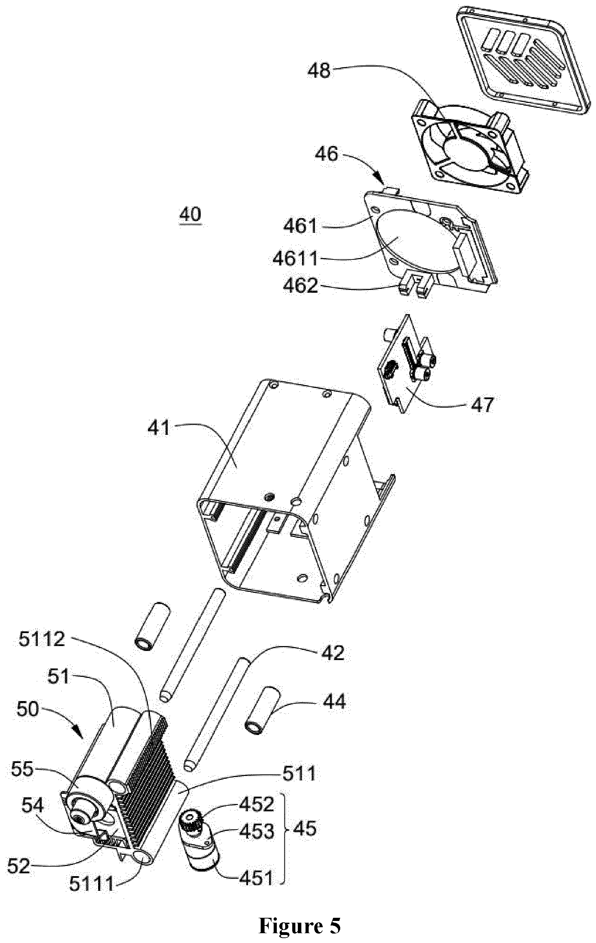

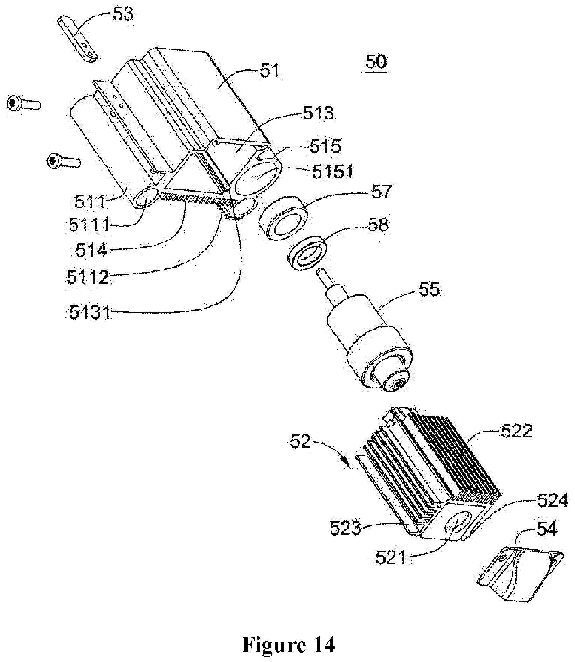

Referring to Figures 5 to 7, 13 and 14 together, the laser and cutter device 40 further includes a drive control assembly 46. The drive control assembly 46 includes a first control board 461 electrically connected to the driving member 451. The first control board 461 is configured to transmit a first control signal to the driving member 451, so as to control the driving member 451 to drive the laser case 51 to move in the third direction or the fourth direction relative to the housing 41. In this way, the first control signal sent by an external control center can be transmitted to the driving member 451 through the first control board 461, to control the rotation of the driving member 451 and further control the rotation of the gear 452 connected to the driving member 451, so as to control the laser case 51 to move in the third direction or the fourth direction relative to the housing 41. The external control center can control the movement distance of the laser case 51 on the guide plain shaft 42 by controlling the amount of the rotation of the driving member 451 through the first control signal, so as to control the movement distance of the laser case 51 in the third direction or the fourth direction relative to the housing 41,to ensure that the laser 52 can accurately move with the laser case 51 to a preset position relative to the housing 41, and thus the machining accuracy of the laser and cutter device 40 is improved.

The drive control assembly 46 further includes a reset sensor 462 arranged on the first control board 461, which is electrically connected to the first control board 461. The first control board 461 is connected to the housing 41, and the laser case 51 is provided with a reset member 53. The laser case 51 moves in the fourth direction until the reset member 53 cooperates with the reset sensor 462 to output a reset signal. The laser case 51 no longer moves in the fourth direction when the reset member 53 cooperates with the reset sensor 462 to output the reset signal. The external control center receives the reset signal through the first control board 461 and records current position information of the laser case 51 to determine an origin position of the laser and cutter device 40 in the third direction and the fourth direction. In this case, the external control center can output the corresponding first control signal based on the requirement of the user through precise algorithms, so as to control the movement distance of the laser case 51 in the third direction or the fourth direction relative to the housing 41, to ensure that the laser 52 and the cutter mechanism 55 can accurately move with the laser case 51 to the preset position relative to the housing 41, and thus the machining accuracy of the laser and cutter device 40 is improved. In this embodiment, the first control board 461 is fixed in the housing 41 through accessories such as screws, and the first control board 461 is positioned on the surface of the connecting portion 411 facing away from the laser case 51. In another embodiment, the first control board 461 may also be bonded to the connecting portion 411 and fixed in the housing 41 by gluing, welding, and the like.

In the embodiment, the reset sensor 462 is a groove-type optocoupler sensor. When the reset member 53 moves in the fourth direction with the laser case 51 and is inserted into a groove of the reset sensor 462, the reset member 53 can cooperate with the reset sensor 462 to output the reset signal. In an embodiment, when the laser case 51 moves in the fourth direction and contacts or presses against the connecting portion 411, the reset member 53 moves in the fourth direction with the laser case 51 and is inserted into the groove of the reset sensor 462.

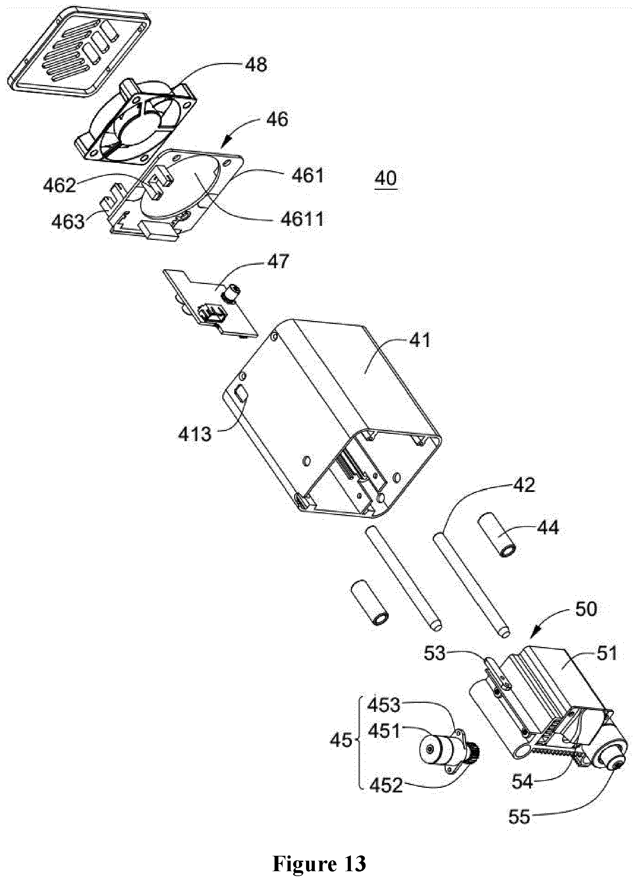

Referring to Figures 2 and 13 together, the drive control assembly 46 further includes a return sensor 463 arranged on the first control board 461. A surface of the housing 41 facing the first rail device 201 is provided with a third through hole 413, and the return sensor 463 is exposed outside the housing 41 through the third through hole 413. The first rail device 201 includes a return member 27 (as shown in Figure 2) for corresponding to the return sensor 463. The laser and cutter device 40 moves in the second direction on the second rail device 203 to allow the return member 27 to be inserted into the third through hole 413 and cooperate with the return sensor 463 to output a return signal. When the return member 27 cooperates with the return sensor 463 to output the return signal, the laser and cutter device 40 no longer moves in the second direction. The external control center receives the return signal through the first control board 461 and records the current position information of the laser and cutter device 40 to determine an origin position of the laser and cutter device 40 in the second direction. In this case, the external control center can output the corresponding return control signal based on the requirement of the user through precise algorithms, so as to control the movement distance of the laser and cutter device 40 in the second direction on the second rail device 203. In this embodiment, the return sensor 463 is a groove-type optocoupler sensor. When the return member 27 moves in the second direction relative to the laser and cutter device 40 and is inserted into a groove of the return sensor 463, the return member 27 can cooperate with the return sensor 463 to output the return signal.

Referring to Figure 5 and Figures 10 to 12 together, the laser and cutter device 40 further includes a second control board 47 electrically connected to the laser 52. The second control board 47 is connected to the housing 41, and is configured to transmit a second control signal to the laser 52 to control the power of the laser light emitted by the laser 52. In this way, the external control center can transmit the second control signal to the laser 52 through the second control board 47, so that the external control center can adjust the second control signal based on the requirement of the user, to adjust the power of the laser light emitted by the laser 52 for machining the workpiece. In this embodiment, a second fixing portion 414 extending in the third direction is provided in the housing 41. The first fixing portion 412 and the second fixing portion 414 are arranged oppositely. A surface of the first fixing portion 412 facing the second fixing portion 414 is provided with a first slide groove 4123, and a surface of the second fixing portion 414 facing the first fixing portion 412 is provided with a second slide groove 4141 corresponding to the first slide groove 4123. The second control board 47 is inserted into the first slide groove 4123 and the second slide groove 4141 along the third direction, so that the second control board 47 is connected to the housing 41.

Referring to Figures 3, 5, 7, 8, and 13 to 15 together, the laser case 51 is provided with a laser accommodation cavity 513 that runs through two opposite end faces of the laser case 51 in the third direction, and the laser 52 is accommodated in the laser accommodation cavity 513. The laser 52 is provided with an emission outlet 521 in the third direction, and the laser light of the laser 52 is emitted from the emission outlet 521. In this way, when the laser light of the laser 52 is emitted from the emission outlet 521, the laser light can perform processing operations such as cutting and engraving on the workpiece along the third direction.

The machining mechanism 50 further includes a radiator. The radiator includes multiple heat-conducting fins 522 arranged on an outer peripheral surface of the laser 52, and each of the multiple heat-conducting fins 522 extends in the third direction. The laser and cutter device 40 further includes a fan 48 connected to the housing 41. The fan 48 corresponds to the radiator, that is, the fan 48 blows air in the third direction. The heat dissipation area of the laser 52 is increased through the heat-conducting fins 522. When the fan 48 corresponding to the radiator blows air to the heat-conducting fins 522, the of heat from the laser 52 is dissipated more rapidly, ensuring that the temperature of the laser 52 is in a normal state when the workpiece is being machined, which avoids the rapid attenuation of the power of the laser light caused by the influence of the high temperature on the laser light emitted by the laser 52, and thereby avoiding influence on the workpiece machining of the laser and cutter device 40 by using the laser light as the processing medium through the laser 52.

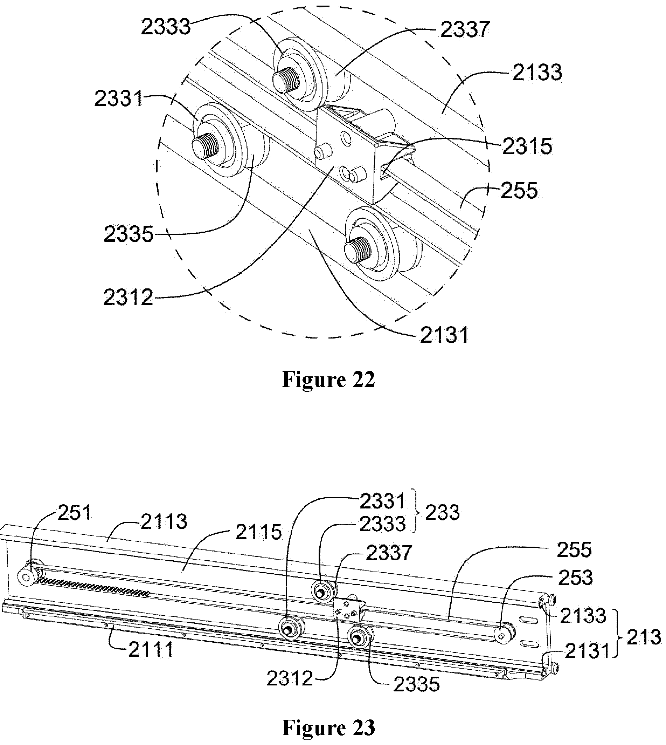

In the embodiment, as shown in Figure 23, two adjacent side surfaces of the laser 52 are each provided with multiple heat-conducting fins 522. For the convenience of description, the two adjacent side surfaces of the laser 52 with the heat-conducting fins 522 are referred to as a first surface and a second surface, respectively. The laser 52 is provided with a groove 523 on the first surface, a protrusion 524 is provided on a side surface of the laser 52 that is opposite to the first surface, and the laser case 51 is provided with a clamp groove 5131, corresponding to the protrusion 524, on an inner wall of the laser accommodation cavity 513. The user can use a screw to pass through the peripheral wall of the laser case 51 to press against a bottom wall of the groove 523, that is, the screw can pass through the peripheral wall of the laser case 51 to press against the first surface. The screw provides a pressing force for the laser 52 to allow the protrusion 524 of the laser 52 to be stably and reliably inserted into the clamp groove 5131. In this way, the laser 52 is accommodated in the laser accommodation cavity 513, that is, the laser 52 is fixedly connected to the laser case 51. In addition, the user can control the screw to no longer press against the first surface by rotating the screw, to release the connection between the laser 52 and the laser case 51, the operation is simple, and disassembly and assembly are convenient.

In the embodiment, the fan 48 is accommodated in an inner cavity of the housing 41. Specifically, the fan 48 is arranged on a surface of the first control board 461 facing away from the laser case 51, the first control board 461 is provided with a vent hole 4611, and an axis of the fan 48 is collinear with an axis of the vent hole 4611. In this way, the air blown by the fan 48 can be conveyed to the laser 52 through the vent hole 4611, to dissipate heat from the laser 52.

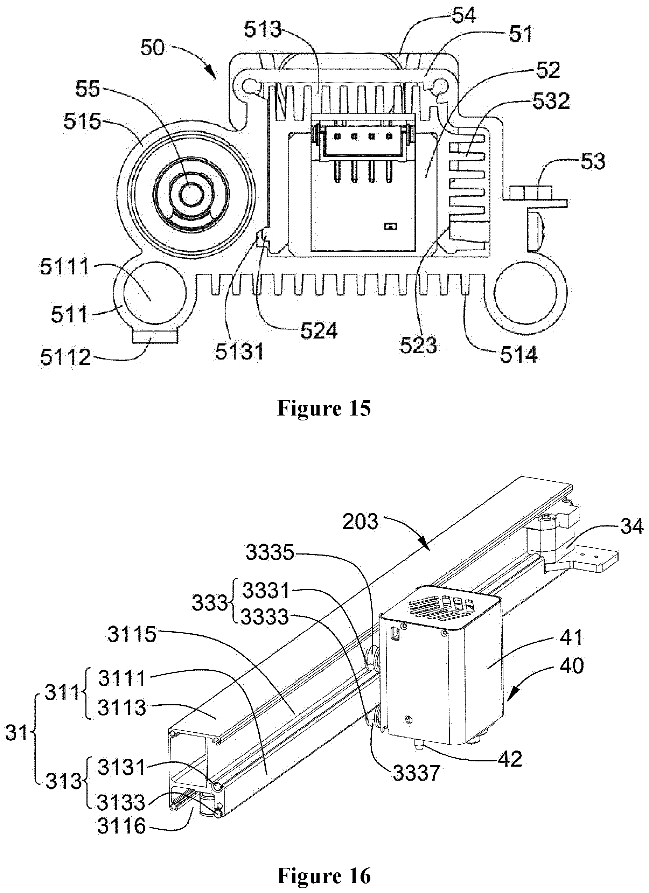

In an embodiment, the radiator further includes multiple radiation fins 514 arranged on the outer peripheral surface of the laser case 51, each of the radiation fins 514 extends in the third direction. The presence of the radiation fins 514 increases the heat dissipation area of the laser case 51 and further accelerates the heat dissipation of the laser 52. In this embodiment, as shown in Figure 15, the laser case 51 is provided with multiple radiation fins 514 on one side surface thereof. For convenience of description, the surface of the laser case 51 with the radiation fins 514 is referred to as a third surface. The third surface is opposite to the second surface, so that when the laser 52 is accommodated in the laser accommodation cavity 513, the heat dissipation area of the laser 52 can be increased as much as possible through the heat-conducting fins 522 arranged on the first surface and the second surface that are opposite and the radiation fins 514 arranged on the third surface of the laser case 51 that is opposite to the second surface, thereby accelerating the heat dissipation of the laser 52.

In an embodiment, referring to Figures 3, 7, and 8 together, the machining mechanism 50 further includes a wind guide hood 54, which is arranged on a surface of the laser case 51 facing the third direction. The wind guide hood 54 guides the wind of the fan 48 escaping from the machining mechanism 50 in the third direction to the laser 52 and the laser case 51, further accelerating the heat dissipation of the laser 52 and further ensuring that the temperature of the laser 52 is in the normal state during operation. Moreover, the wind guide hood 54 guides the wind of the fan 48 that escapes from the laser case 51 and the laser 52 in the third direction to the laser case 51 and the laser 52, thereby preventing dust generated by the machining of the laser and cutter device 40 from being accumulated outside a lens of the laser 52, further avoids affection on the processing effect of the laser 52, thereby achieving dust prevention for the laser 52.

Referring to Figures 1, 5, 7, 8, 13, and 14 together, the laser case 51 further includes an accommodation portion 515 which is provided with a second accommodation cavity 5151 extending in the third direction, and the cutter mechanism 55 is accommodated in the second accommodation cavity 5151. In this way, the laser case 51 moves in the third direction on the guide plain shaft 42, and the cutter mechanism 55 can move with the laser case 51 in the third direction relative to the housing 41 to machine the workpiece, for example, to perform operations such as cutting, indentation, or engraving on the workpiece. When the laser case 51 moves in the fourth direction on the guide plain shaft 42, the cutter mechanism 55 can move with the laser case 51 in the fourth direction relative to the housing 41 to get away from the workpiece.

In the embodiment, a first magnetic attraction member 57 is fixed in the second accommodation cavity 5151, and a second magnetic attraction member 58 is provided on a surface of the cutter mechanism 55 facing the first magnetic attraction member 57. The cutter mechanism 55 is accommodated in the second accommodation cavity 5151 in a manner that the second magnetic attraction member 58 attracts the first magnetic attraction member 57. The cutter mechanism 55 is accommodated in the second accommodation cavity 5151 through magnetic attraction, which reduces the machining accuracy requirement of the second accommodation cavity 5151, and facilitates disassembly and assembly of the cutter mechanism 55, making it convenient to replace the cutter mechanism 55 as required. It can be understood that the cutter mechanism 55 may also be directly fixed in the second accommodation cavity 5151 through welding, bonding, and so on.

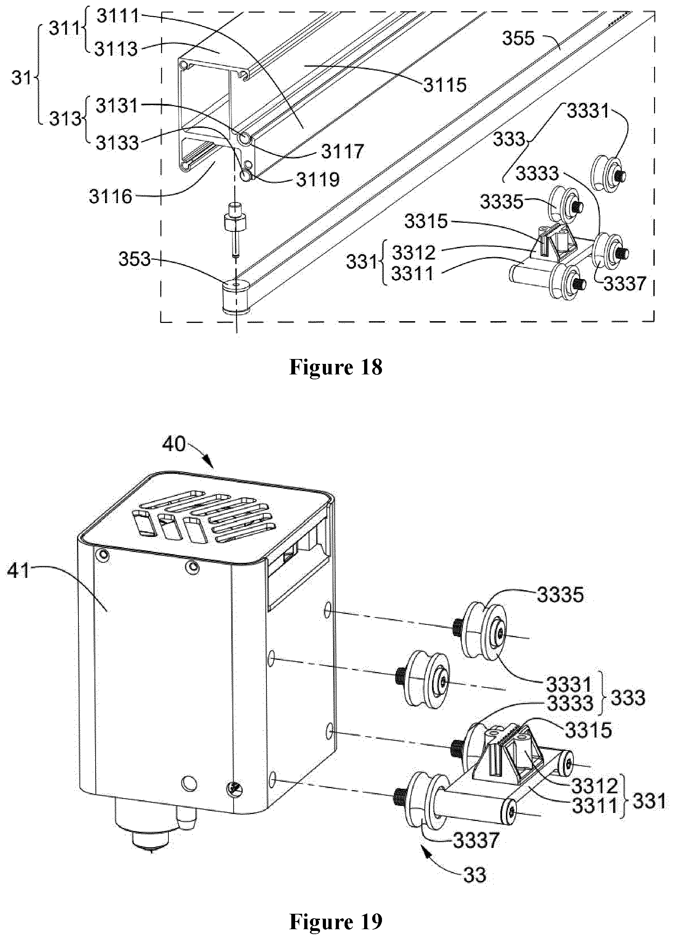

Referring to Figures 16 to 18 together, the second rail device 203 includes a rail frame assembly 31, a mounting assembly 33, a driver 34, and a transmission assembly 35. The mounting assembly 33 is movably arranged on the rail frame assembly 31 for connecting the laser and cutter device 40. The transmission assembly 35 is connected to the mounting assembly 33. The driver 34 is configured to drive the transmission assembly 35 to drive the mounting assembly 33 to linearly move on the rail frame assembly 31 along the second direction.

The rail frame assembly 31 includes a rail frame 311 and a plain shaft 313 arranged on the rail frame 311. The rail frame 311 includes a first connecting portion 3111 and a second connecting portion 3113 fixedly connected to the first connecting portion 3111. A surface of the first connecting portion 3111 facing away from the second connecting portion 3113 is provided with a groove 3116, which is configured to accommodate the transmission assembly 35. The second connecting portion 3113 is provided with a guide groove 3115 for accommodating the mounting assembly 33. The opening direction of the guide groove 3115 is different from the opening direction of the groove 3116. The opening of the guide groove 3115 faces the laser and cutter device 40, and the opening of the groove 3116 faces the bottom of the laser and cutter machining apparatus 100 (as shown in Figure 2). An inner wall of the guide groove 3115 is provided with a first accommodation groove 3117 in communication with the guide groove 3115, and the first accommodation groove 3117is configured to accommodate the plain shaft 313. An end face of the first connecting portion 3111 that faces away from the guide groove 3115 is provided with a second accommodation groove 3119 for accommodating the plain shaft 313.

The plain shaft 313 includes a first plain shaft 3131 and a second plain shaft 3133. The first plain shaft 3131 is fixedly accommodated in the first accommodation groove 3117 of the rail frame 311, for guiding the movement of the mounting assembly 33 relative to the rail frame 311. The second plain shaft 3133 is fixedly accommodated in the second accommodation groove 3119 of the rail frame 311, for guiding the movement of the mounting assembly 33 relative to the rail frame 311. In this embodiment, the first plain shaft 3131 extends in the second direction, and the second plain shaft 3133 extends in the second direction. The first plain shaft 3131 and the second plain shaft 3133 are spaced apart along the third direction (direction Z 1 as shown in Figures 1 and 2). In other words, the first plain shaft 3131 and the second plain shaft 3133 are arranged in a direction different from the axis direction of the first plain shaft 3131, that is, the arrangement direction of the first plain shaft 3131 and the second plain shaft 3133 is different from the axis direction of the first plain shaft 3131.

In the embodiment, the first plain shaft 3131 is pressed against the first accommodation groove 3117, and the second plain shaft 3133 is pressed the second accommodation groove 3119. The cross section of the first accommodation groove 3117 and the cross section of the second accommodation groove 3119 are arc-shaped. A size of an opening of the first accommodation groove 3117 is smaller than a maximum diameter of the cross section. During installation, the first plain shaft 3131 is squeezed into the first accommodation groove 3117 through the opening of the first accommodation groove 3117, and the first plain shaft 3131 is in interference fit with an inner wall of the first accommodation groove 3117, which is beneficial to improving the connection strength between the first plain shaft 3131 and the rail frame 311, and the assembly is fast and the structure is stable. A size of an opening of the second accommodation groove 3119 is smaller than a maximum diameter of the cross section. During installation, the second plain shaft 3133 is squeezed into the second accommodation groove 3119 through the opening of the second accommodation groove 3119, and the second plain shaft 3133 is in interference fit with an inner wall of the second accommodation groove 3119, which is beneficial improving the connection strength between the second plain shaft 3133 and the rail frame 311, and the assembly is fast and the structure is stable. A gap of the second rail device 203 in the third direction is ensured through the constant spacing between the first plain shaft 3131 and the second plain shaft 3133 on the rail frame 311. It can be understood that the first accommodation groove 3117 may be omitted, and the first plain shaft 3131 is directly fixed to the inner wall of the guide groove 3115 of the rail frame 311. It can be understood that the second accommodation groove 3119 may be omitted, and the second plain shaft 3133 is directly fixed to an end face, facing away from the second connecting portion 3113, of the first connecting portion 3111 of the rail frame 311.

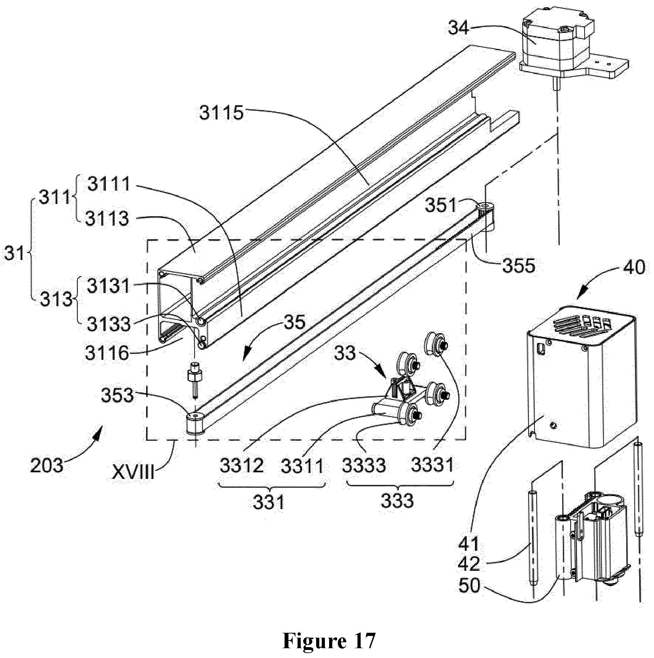

Referring to Figures 17 to 19 together, the mounting assembly 33 includes a mounting seat 331 and a pulley 333. The mounting seat 331 is movably connected to the rail frame assembly 31 through the pulley 333. The mounting seat 331 includes a mounting plate 3311 and a connecting member 3312 fixed to the mounting plate 3311. The connecting member 3312 is provided with a connecting groove 3315 for connection with the transmission assembly 35. The mounting plate 3311 is connected to the housing 41 of the laser and cutter device 40, and the connecting member 3312 is connected to the pulley 333 through the mounting plate 3311, so that the housing 41 is connected to the transmission assembly 35. The pulley 333 is connected to the housing 41 of the laser and cutter device 40. The driver 34 drives the transmission assembly 35 to move the mounting seat 331 in the second direction, and the pulley 333 and the laser and cutter device 40 move linearly with the mounting seat 331 along the second direction on the rail frame assembly 31. It can be understood that the mounting seat 331 may be omitted, and the laser and cutter device 40 can move in the second direction on the rail frame assembly 31 through the pulley 333 connected to the housing 41.

The pulley 333 includes a first pulley 3331 and a second pulley 3333. The first pulley 3331 is rotatably mounted on the housing 41 of the laser and cutter device 40 and is slidably connected to the first plain shaft 3131. The first pulley 3331 is accommodated in the guide groove 3115. The first pulley 3331 rolls along the first plain shaft 3131 when the transmission assembly 35 drives the mounting seat 331 to move. The first pulley 3331 can roll along the first plain shaft 3131, that is, the first pulley 3331 is rollingly connected to the first plain shaft 3131, which is beneficial to reducing friction between the first pulley 3331 and the first plain shaft 3131, the noise is reduced, and wear between the first pulley 3331 and the rail frame 311 is also reduced, so that the laser and cutter machining apparatus 100 has the characteristics of high precision, high strength, long life and low noise.

In the embodiment, an outer wall of the first pulley 3331 is provided with an annular slide groove 3335, the first plain shaft 3131 passes through the slide groove 3335, and the first plain shaft 3131 is slidably connected to the slide groove 3335 of the first pulley 3331. The slide groove 3335 can limit the position of the first plain shaft 3131, to reduce the possibility that the first pulley 3331 being separated from the first plain shaft 3131. It can be understood that the slide groove 3335 may be omitted, and the first plain shaft 3131 may be provided with a slide groove, and the first pulley 3331 is slidably connected to the slide groove of the first plain shaft 3131. It can be understood that the first pulley 3331 may be directly fixed to the housing 41 of the laser and cutter device 40, that is, the first pulley 3331 cannot rotate when the first pulley 3331 is connected to the housing 41.

The second pulley 3333 is rotatably mounted between the housing 41 and the mounting plate 3311, and is slidably connected to the second plain shaft 3133. The first pulley 3331 and the second pulley 3333 are arranged on the mounting seat 331 along the third direction. The first plain shaft 3131 is located between the first pulley 3331 and the second pulley 3333, and the second plain shaft 3133 is located between the first pulley 3331 and the second pulley 3333. The first connecting portion 3111 is located between the first pulley 3331 and the second pulley 3333. When the transmission assembly 35 drives the mounting seat 331 to move, the second pulley 3333 can roll along the second plain shaft 3133. The second pulley 3333 can roll along the second plain shaft 3133, that is, the second pulley 3333 is rollingly connected to the second plain shaft 3133, which is beneficial to reducing the friction between the second pulley 3333 and the second plain shaft 3133, the noise is reduced, and wear between the second pulley 3333 and the rail frame 311 is also reduced, so that the laser and cutter machining apparatus 100 has the characteristics of high precision, high strength, long life and low noise.

In the embodiment, an outer wall of the second pulley 3333 is provided with an annular slide groove 3337, the second plain shaft 3133 passes through the slide groove 3337, and the second plain shaft 3133 is slidably connected to the slide groove 3337 of the second pulley 3333. The slide groove 3337 can limit the position of the second plain shaft 3133, to reduce the possibility that the second pulley 3333 being separated from the second plain shaft 3133. It can be understood that the slide groove 3337 may be omitted, and the second plain shaft 3133 may be provided with a slide groove, and the second pulley 3333 is slidably connected to the slide groove of the second plain shaft 3133. It can be understood that the second pulley 3333 may be directly fixed to the mounting plate 3311, that is, the second pulley 3333 cannot rotate when the second pulley 3333 is connected to the mounting plate 3311.

The cooperation between the first plain shaft 3131 and the first pulley 3331 and the cooperation between the second plain shaft 3133 and the second pulley 3333 guide the movement of the mounting seat 331 in the second direction, thereby improving smoothness and accuracy of the linear movement of the mounting seat 331 in the second direction, and further improving smoothness and accuracy of the linear movement of the laser and cutter device 40 on the second rail device 203 in the second direction.

In addition, when the housing 41 of the laser and cutter device 40 is connected to the pulley 333, the housing 41 covers the guide groove 3115. Under the shielding of the housing 41, the first pulley 3331 accommodated in the guide groove 3115 is hidden in the guide groove 3115, and the second pulley 3333 fixed to the end face of the first connecting portion 3111 of the rail frame 3111 that faces away from the second connecting portion 3113 is hidden under the second connecting portion 3113, which is beneficial to reducing the interference of other components on the movement of the first pulley 3331 and the second pulley 3333, and is also beneficial to the miniaturization of the second rail device 203.

Referring to Figures 16 to 18 together, the driver 34 is fixed to the rail frame 311 and is close to one end of the guide groove 3115. A driving shaft of the driver 34 is connected to the transmission assembly 35 to drive the transmission assembly 35 to move.

The transmission assembly 35 is accommodated in the groove 3116. The transmission assembly 35 includes a driving wheel 351, a driven wheel 353, and a synchronous belt 355. The driving wheel 351 is connected to the driving shaft of the driver 34. The driven wheel 353 is rotatably arranged on the rail frame 311, and the synchronous belt 355 is sleeved on the driving wheel 351 and the driven wheel 353. The synchronous belt 355 is fixedly arranged in the groove 3116. In this embodiment, the driver 34 is a rotating motor that drives the driving wheel 351 to rotate, and the driving wheel 351 drives the synchronous belt 355. The driving wheel 351 drives the synchronous belt 355 to move when the driver 34 drives the driving wheel 351 to rotate, so that the mounting assembly 33 is driven to move linearly along the first plain shaft 3131 and the second plain shaft 3133. It can be understood that the connecting member 3312 may be omitted and the mounting plate 3311 is directly connected to the synchronous belt 355. It can be understood that the transmission assembly 35 may be omitted, and the driver 34 is directly connected to the mounting plate 3311, where the driver 34 may be a linear motor. The driver 34 drives the mounting plate 3311 to move linearly in the second direction, so as to drive the laser and cutter device 40 connected to the mounting plate 3311 to move linearly in the second direction.

Referring to Figures 1 and 2 together, when the laser and cutter machining apparatus 100 is required to machine the workpiece, the second rail device 203 moves linearly in the first direction on the first rail device 201. The driver 34 of the second rail device 203 drives the driving wheel 351 to rotate, so as to drive the laser and cutter device 40 to move linearly in the second direction on the second rail device 203. In this way, the machining position of the laser and cutter device 40 can be changed through the movement of the second rail device 203 on the first rail device 201 and the movement of the laser and cutter device 40 on the second rail device 203.

It can be understood that the structure of the second rail device 203 according to the present application can be applicable to a linear motion rail of the laser and cutter machining apparatus 100, for example, it is applicable to the linear motion rail in any directions such as X-axis, Y-axis, Z1, and Z2 as shown in Figure 1.

Referring to Figures 16 to 19, in the second rail device 203 according to the present application, since the first pulley 3331 is slidingly connected to the first plain shaft 3131, and the second pulley 3333 is slidingly connected to the second plain shaft 3133, the first plain shaft 3131 and the second plain shaft 3133 guide the movement of the mounting assembly 33 relative to the rail frame 311, which improves smoothness and accuracy of the movement of the mounting assembly 33 connected to the housing 41 of the laser and cutter device 40 on the rail frame 311, further improves smoothness and accuracy of the movement of the laser and cutter device 40 on the rail frame 311, thereby improving the machining accuracy of the laser and cutter machining apparatus 100.

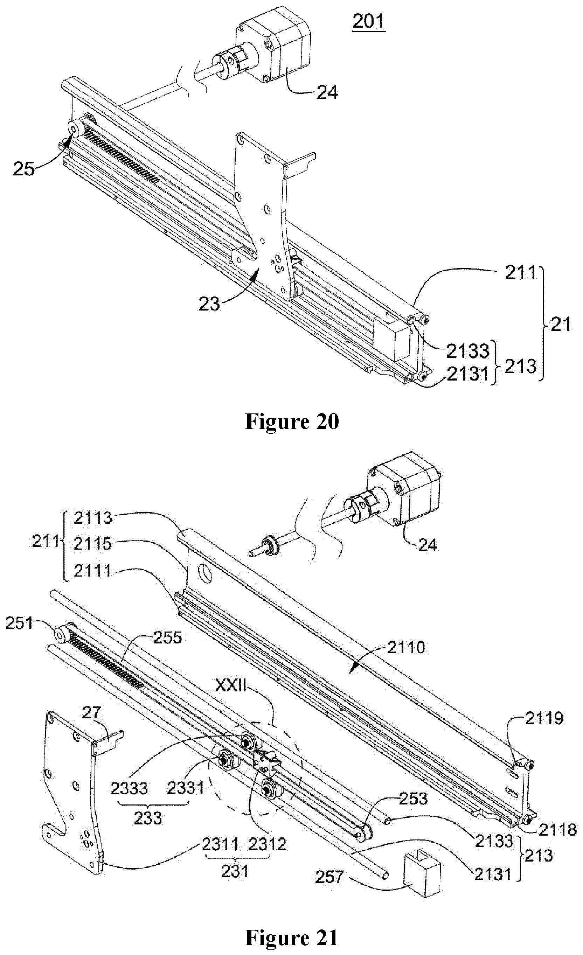

Referring to Figures 20 and 21 together, the first rail device 201 includes a rail frame assembly 21, a mounting assembly 23, a driver 24, and a transmission assembly 25. The mounting assembly 23 is movably arranged on the rail frame assembly 21 for supporting the second rail device 203 and the laser and cutter device 40. The transmission assembly 25 is connected to the mounting assembly 23. The driver 24 is configured to drive the transmission assembly 25 to further drive the mounting assembly 23 to move linearly in the first direction on the rail frame assembly 21.

The rail frame assembly 21 includes a rail frame 211 and a plain shaft 213 arranged on the rail frame 211. The rail frame 211 includes a first connecting portion 2111, a second connecting portion 2113, and a third connecting portion 2115. The third connecting portion 2115 is fixedly connected between the first connecting portion 2111 and the second connecting portion 2113, and a groove 2110 is defined by the first connecting portion 2111, the second connecting portion 2113, and the third connecting portion 2115 together. The groove 2110 is substantially U-shaped. The first connecting portion 2111 and the second connecting portion 2113 are arranged opposite to each other in the third direction.

Referring to Figures 20, 21, and 23 together, the first connecting portion 2111 is provided with a first accommodation groove 2118 in communication with the groove 2110, and the first accommodation groove is configured for accommodating the plain shaft 213. The second connecting portion 2113 is provided with a second accommodation groove 2119 in communication with the groove 2110, and the second accommodation groove is configured for accommodating the plain shaft 213.

In the embodiment, the rail frame 211 is made of a special material and is integrally molded through extrusion by a mould, so that the rail frame has good strength. It can be understood that the manner for forming the rail frame 211 is not limited in the present application, for example, the rail frame 211 may be formed by assembling the first connecting portion 2111, the second connecting portion 2113, and the third connecting portion 2115 that are independent.

It can be understood that the third connecting portion 2115 may be omitted in the rail frame 211, the first connecting portion 2111 is fixedly connected to the second connecting portion 2113, and a V-shaped groove is defined by the first connecting portion 2111 and the second connecting portion 2113.

The plain shaft 213 includes a first plain shaft 2131 and a second plain shaft 2133. The first plain shaft 2131 is fixedly accommodated in the first accommodation groove 2118 of the first connecting portion 2111, and is configured to guide the movement of the mounting assembly 23 relative to the rail frame 211. The second plain shaft 2133 is fixedly accommodated in the second accommodation groove 2119 of the second connecting portion 2113, and is configured to guide the movement of the mounting assembly 23 relative to the rail frame 211. The first plain shaft 2131 is inlaid on a side wall of the groove 2110, and the second plain shaft 2133 is inlaid on another side wall of the groove 2110, which is beneficial to the miniaturization of the first rail device 201. In this embodiment, the first accommodation groove 2118 and the second accommodation groove 2119 extend in the first direction, the axis of the first plain shaft 2131 extends in the first direction, and the axis of the second plain shaft 2133 extends in the first direction. The first plain shaft 2131 and the second plain shaft 2133 are spaced apart along the third direction (direction Z1 as shown in Figure 1). In other words, the first plain shaft 2131 and the second plain shaft 2133 are arranged in a direction different from the axis direction of the first plain shaft 2131, that is, the arrangement direction of the first plain shaft 2131 and the second plain shaft 2133 is different from the axis direction of the first plain shaft 2131.

In the embodiment, the first plain shaft 2131 is pressed against the first accommodation groove 2118 of the first connecting portion 2111. The cross section of the first accommodation groove 2118 is arc-shaped, and a size of an opening of the first accommodation groove 2118 is smaller than a maximum diameter of the cross section. During installation, the first plain shaft 2131 is squeezed into the first accommodation groove 2118 through the opening of the first accommodation groove 2118, and the first plain shaft 2131 is in interference fit with the inner wall of the first accommodation groove 2118 of the first connecting portion 2111, which is beneficial to improving the connection strength between the first plain shaft 2131 and the rail frame 211, and the assembly is quick and the structure is stable. The second plain shaft 2133 is pressed against the second accommodation groove 2119 of the second connecting portion 2113, and the second plain shaft 2133 is in interference fit with the inner wall of the second accommodation groove 2119 of the second connecting portion 2113, which is beneficial to improving the connection strength between the second plain shaft 2133 and the rail frame 211. Similar to the first accommodation groove 2118, the cross section of the second accommodation groove 2119 is arc-shaped, and a size of an opening of the second accommodation groove 2119 is smaller than a maximum diameter of the cross section. During installation, the second plain shaft 2133 is squeezed into the second accommodation groove 2119 through the opening of the second accommodation groove 2119. A gap of the first rail device 201 in the third direction is ensured through the constant spacing between the first plain shaft 2131 and the second plain shaft 2133 on the rail frame 211. It can be understood that the first accommodation groove 2118 in the first connecting portion 2111 may be omitted, and the first plain shaft 2131 is directly fixed to the first connecting portion 2111 through welding, bonding, and so on. It can be understood that the second accommodation groove 2119 in the second connecting portion 2113 may be omitted, and the second plain shaft 2133 is directly fixed to the second connecting portion 2113 through welding, bonding, and so on. It can be understood that the number of the plain shaft 213 may be one.

Referring to Figure 1 and Figures 20 to 23 together, the mounting assembly 23 includes a mounting seat 231 and a pulley 233. The mounting seat 231 is movably connected to the rail frame 211 of the first rail device 201 through the pulley 233.

The mounting seat 231 includes a mounting plate 2311 and a connecting member 2312 fixed to the mounting plate 2311. As shown in Figures 1 and 4, the mounting plate 2311 is configured to support the connecting member 2312, the pulley 233, the second rail device 203, and the laser and cutter device 40. The connecting member 2312 is provided with a connecting groove 2315 for connection with the transmission assembly 25.

The pulley 23 includes a first pulley 2331 and a second pulley 2333. The first pulley 2331 is rotatably mounted on the mounting plate 2311 and is slidably connected to the first plain shaft 2131. The first pulley 2331 is accommodated in the groove 2110 and is located between the first plain shaft 2131 and the second plain shaft 2133. The mounting plate 2311 covers the groove 2110, and the first pulley 2331 is located between the mounting plate 2311 and the third connecting portion 2115 of the rail frame 211. The first pulley 2331 rolls along the first plain shaft 2131 when the transmission assembly 25 drives the mounting seat 231 to move. The first pulley 2331 can roll along the first plain shaft 2131, that is, the first pulley 2331 is rollingly connected to the first plain shaft 2131, which is beneficial to reducing friction between the first pulley 2331 and the first plain shaft 2131, the noise is reduced, and the wear between the first pulley 2331 and the rail frame 211 is also reduced, so that the laser and cutter machining apparatus 100 has the characteristics of high precision, high strength, long life and low noise.

In the embodiment, an outer wall of the first pulley 2331 is provided with an annular slide groove 2335, the first plain shaft 2131 passes through the slide groove 2335, and the first plain shaft 2131 is slidably connected to the slide groove 2335 of the first pulley 2331. The slide groove 2335 can limit the position of the first plain shaft 2131, to reduce the possibility that the first pulley 2331 being separated from the first plain shaft 2131. It can be understood that the slide groove 2335 of the first pulley 2331 may be omitted, the first plain shaft 2131 may be provided with a guide groove, and the first pulley 2331 is slidably connected to the guide groove of the first plain shaft 2131. It can be understood that the first pulley 2331 may be directly fixed to the mounting plate 2311, that is, the first pulley 2331 cannot rotate when the first pulley 2331 is connected to the mounting plate 2311.

The second pulley 2333 is rotatably mounted on the mounting plate 2311 and is slidably connected to the second plain shaft 2133. The second pulley 2333 is accommodated in the groove 2110 and is located between the first plain shaft 2131 and the second plain shaft 2133. When the transmission assembly 25 drives the connecting member 2312 to further drive the mounting seat 231 to move, the second pulley 2333 rolls along the second plain shaft 2133, that is, the second pulley 2333 is rollingly connected to the second plain shaft 2133, which is beneficial to reducing friction between the second pulley 2333 and the second plain shaft 2133, the noise is reduced, and the wear between the second pulley 2333 and the rail frame 211 is also reduced, so that the laser and cutter machining apparatus 100 has the characteristics of high precision, high strength, long life and low noise.

In this embodiment, an outer wall of the second pulley 2333 is provided with an annular slide groove 2335, the second plain shaft 2133 passes through the slide groove 2335 of the second pulley 2333, and the second plain shaft 2133 is slidably connected to the slide groove 2335 of the second pulley 2333. The slide groove 2335 of the second pulley 2333 can limit the position of the second plain shaft 2133, to reduce the possibility that the second pulley 2333 being separated from the second plain shaft 2133. It can be understood that the slide groove 2335 of the second pulley 2333 may be omitted, the second plain shaft 2133 may be provided with a guide groove, and the second pulley 2333 is slidably connected to the guide groove of the second plain shaft 2133. It can be understood that the second pulley 2333 may be directly fixed to the mounting plate 2311, that is, the second pulley 2333 cannot rotate when the second pulley 2333 is connected to the mounting plate 2311.

The cooperation between the first plain shaft 2131 and the first pulley 2331 and the cooperation between the second plain shaft 2133 and the second pulley 2333 guide the movement of the mounting seat 231 in the first direction, which improves smoothness and accuracy of the linear movement of the mounting seat 231 in the first direction, and further improves smoothness of the linear movement of the second rail device 203 (as shown in Figure 1) on the first rail device 201 in the first direction.

In addition, the mounting plate 2311 covers the groove 2110, the first pulley 2331 is located between the mounting plate 2311 and the rail frame 211, and the second pulley 2333 is located between the mounting plate 2311 and the rail frame 211, so that both the first pulley 2331 and the second pulley 2333 are hidden in the groove 2110, which is beneficial to reducing interference of other components on the movement of the first pulley 2331 and the second pulley 2333, and is also beneficial to the miniaturization of the first rail device 201.

Referring to Figures 20, 21, and 23 together, the driver 24 is fixed to the third connecting portion 2115 of the rail frame 211, and a driving shaft of the driver 24 is connected to the transmission assembly 25 for driving the transmission assembly 25 to move. In this embodiment, as shown in Figure 2, the two first rail devices 201 share the same driver 24, and the driver 24 is fixed to the rail frame 211 of one of the two first rail devices 201 to drive the mounting assemblies 23 of the two first rail devices 201 to move. It can be understood that each of the two first rail devices 201 may be provided with one driver 24.

Referring to Figures 20 to 23, the transmission assembly 25 includes a driving wheel 251, a driven wheel 253, and a synchronous belt 255. The driving wheel 251 is connected to the driving shaft of the driver 24. The driven wheel 253 is rotatably arranged on the rail frame 211, and the synchronous belt 255 is sleeved on the driving wheel 251 and the driven wheel 253. The synchronous belt 255 fixedly passes through the connecting groove 2315 of the connecting member 2312. In this embodiment, the driver 24 is a rotating motor which drives the driving wheel 251 to rotate, and the driving wheel 251 drives the synchronous belt 255. When the driver 24 drives the driving wheel 351 to rotate, the driving wheel 251 drives the synchronous belt 255 to move to further drive the connecting member 2312 to move, and thus the mounting assembly 23 is driven to move linearly along the first plain shaft 2131 and the second plain shaft 2133.

The transmission assembly 25 further includes a fixing bracket 257 (as shown in Figure 21). The fixing bracket 257 is fixed to the rail frame 211, and supports the driven wheel 253. It can be understood that connecting member 2312 may be omitted, and the mounting plate 2311 is directly connected to the synchronous belt 255. It can be understood that the transmission assembly 25 may be omitted, and the driver 24 is directly connected to the mounting seat 231, the driver 24 may be a linear motor, and the driver 24 drives the mounting seat 231 to move linearly in the first direction.

Referring to Figures 1, 2, 17, and 21 together, when the laser and cutter machining apparatus 100 is required to machine the workpiece, the driver 24 drives the driving wheel 251 to rotate, and the driving wheel 251 drives the second rail device 203 to move linearly in the first direction on the first rail device 201. The driver 34 of the second rail device 203 drives the driving wheel 351 to rotate to drive the laser and cutter device 40 to move linearly in the second direction on the second rail device 203. In this way, the machining position of the laser and cutter device 40 can be changed through the movement of the second rail device 203 on the first rail device 201 and the movement of the laser and cutter device 40 on the second rail device 203.

It can be understood that the structure of the first rail device 201 may be similar to that of the second rail device 203, that is, it can be understood that the structure of the first rail device 201 according to the present application can be applicable to a rail guide mechanism of the linear motion of the laser and cutter machining apparatus 100, for example, it is applicable as the linear motion rail in any directions such as X-axis, Y-axis, Z1, and Z2 in Figure 1.

Referring to Figures 16 and 21 together, in this embodiment, the laser and cutter device 40 moves in the second direction on the second rail device 203, and the pulley 333 of the second rail device 203 is directly rotatably mounted on the housing 41 of the laser and cutter device 40. In another embodiment, the laser and cutter device 40 may move in the first direction on the first rail device 201, and the housing 41 of the laser and cutter device 40 is fixed to the mounting plate 2311 of the first rail device 201. As the pulley 233 of the first rail device 201 is rotatably connected to the mounting plate 2311, the pulley 233 can be indirectly rotatably connected to the housing 41 of the laser and cutter device 40 through the mounting plate 2311.

Optionally, the laser and cutter machining apparatus 100 may further include a frame. A closed machining space is provided in the frame for storing and machining of the workpiece to be machined. The frame is provided with an opening in communication with the machining space, the frame is connected to a cover plate, and the cover plate is configured to rotatably cover the opening. The opening is configured to allow the user to place in the workpiece to be machined or take out the machined workpiece. The frame is formed by a bottom plate, side plates, and other parts being arranged in an enclosing manner to form the frame. The support device 10, the rail device 20, and the laser and cutter device 40 are arranged in the machining space. The laser and cutter device 40 is movable in the machining space through connection with the rail device 20, so as to perform laser engraving, laser cutting, cutter cutting, cutter scratching, and the like on the workpiece to be machined through laser or a cutter, to realize desktop level arrangement and miniaturization of the laser and cutter machining apparatus 100.

The embodiments described hereinabove are only preferred embodiments of the present application, and certainly are not intended to limit the scope of the present application, and therefore, equivalent changes made based on the claims of the present application still fall within the scope of the present application.

## Claims

1. A laser and cutter machining apparatus, comprising a laser and cutter device, wherein
the laser and cutter device comprises a housing, a guide plain shaft, and a machining mechanism; wherein
the guide plain shaft is arranged in the housing;
the machining mechanism comprises a laser case slidably connected to the guide plain shaft, a laser arranged in the laser case, and a cutter mechanism arranged in the laser case; and wherein
the laser and the cutter mechanism are configured to move, along with the laser case, relative to the housing along the guide plain shaft.

2. The laser and cutter machining apparatus according to claim 1, wherein the laser and cutter device further comprises a driving assembly, the driving assembly comprises a driving member arranged in the housing, and the driving member is configured to drive the laser case to move along the guide plain shaft.

3. The laser and cutter machining apparatus according to claim 2, wherein
the laser case comprises a guide portion corresponding to the guide plain shaft, wherein the guide portion is provided with a guide hole penetrating through two opposite end faces of the guide portion along an axial direction of the guide plain shaft, and the guide plain shaft movable passes through the guide hole; and
an outer peripheral wall of the guide portion is provided with a rack extending along the axial direction of the guide plain shaft, the driving assembly further comprises a gear connected to the driving member and engaged with the rack, the driving member is configured to drive the gear to rotate to allow the rack to move along the axial direction of the guide plain shaft relative to the guide plain shaft.

4. The laser and cutter machining apparatus according to claim 2, wherein
the laser and cutter device further comprises a drive control assembly, wherein the drive control assembly comprises a first control board electrically connected to the driving member, the first control board is configured to transmit a first control signal to the driving member, to control the driving member to drive the laser case to move along an axial direction of the guide plain shaft relative to the housing; and wherein
the drive control assembly further comprises a reset sensor arranged on the first control board, the reset sensor is electrically connected to the first control board, the first control board is connected to the housing, the laser case is provided with a reset member, and the reset member cooperates with the reset sensor to output a reset signal.

5. The laser and cutter machining apparatus according to claim 1, wherein
the housing is provided with a connecting portion corresponding to the guide plain shaft, the connecting portion is provided with a connecting hole, and an end of the guide plain shaft is inserted into the connecting hole; and/or
the laser case is provided with a laser accommodation cavity that runs through two opposite end faces of the laser case along an axial direction of the guide plain shaft, the laser is accommodated in the laser accommodation cavity, the laser is provided with an emission outlet along the axial direction of the guide plain shaft, and laser light of the laser is emitted from the emission outlet; and/or
the machining mechanism further comprises a radiator, wherein the radiator comprises a plurality of heat-conducting fins arranged on an outer peripheral surface of the laser, each of the plurality of heat-conducting fins extends in the axial direction of the guide plain shaft; the laser and cutter device further comprises a fan connected to the housing, and the fan corresponds to the radiator.

6. The laser and cutter machining apparatus according to claim 1, further comprising a rail device, the rail device comprises a rail frame assembly and a mounting assembly; and wherein
the rail frame assembly comprises a rail frame and a plain shaft arranged on the rail frame, the mounting assembly comprises a pulley, the pulley is provided with a slide groove, the slide groove is slidably connected to the plain shaft, the pulley is rotatably mounted on the housing, the housing is configured to move along the plain shaft with the pulley, and an axis of the plain shaft is non-collinear with an axis of the guide plain shaft.

7. The laser and cutter machining apparatus according to claim 6, wherein the plain shaft comprises a first plain shaft and a second plain shaft, the pulley comprises a first pulley slidably connected to the first plain shaft and a second pulley slidably connected to the second plain shaft, the first pulley is located between the first plain shaft and the second plain shaft, and the second pulley is located between the first plain shaft and the second plain shaft.

8. The laser and cutter machining apparatus according to claim 7, wherein the rail frame is provided with a groove, at least part of the first plain shaft is located in the groove, at least part of the second plain shaft is located in the groove, the first pulley is accommodated in the groove, the second pulley is accommodated in the groove, and the first plain shaft and the second plain shaft are arranged oppositely.

9. The laser and cutter machining apparatus according to claim 8, wherein the rail frame comprises a first connecting portion and a second connecting portion that are fixedly connected, and the groove is defined by the first connecting portion and the second connecting portion; and wherein
the first connecting portion is provided with a first accommodation groove in communication with the groove, and the first plain shaft is fixedly accommodated in the first accommodation groove; and
the second connecting portion is provided with a second accommodation groove in communication with the groove, and the second plain shaft is fixedly accommodated in the second accommodation groove.

10. The laser and cutter machining apparatus according to claim 6, wherein the plain shaft comprises a first plain shaft and a second plain shaft, the pulley comprises a first pulley slidably connected to the first plain shaft and a second pulley slidably connected to the second plain shaft, the first plain shaft is located between the first pulley and the second pulley, and the second plain shaft is located between the first pulley and the second pulley.

11. The laser and cutter machining apparatus according to claim 10, wherein the rail frame comprises a first connecting portion and a second connecting portion fixedly connected to the first connecting portion; and wherein
a side of the first connecting portion that faces away from the second connecting portion is provided with a groove; the second connecting portion is provided with a guide groove, and an opening of the guide groove faces a direction different from an opening direction of the groove; and
the first plain shaft is fixed to an inner wall of the guide groove, the second plain shaft is fixed to an end face of the first connecting portion that faces away from the second connecting portion, the first connecting portion is located between the first pulley and the second pulley, and the first pulley is accommodated in the guide groove.

12. The laser and cutter machining apparatus according to claim 6, wherein
the mounting assembly further comprises a mounting seat, the mounting seat comprises a mounting plate and a connecting member fixed to the mounting plate, and the pulley is mounted on the mounting plate; and
the rail device further includes a transmission assembly, the transmission assembly comprises a driving wheel, a driven wheel, and a synchronous belt, the driving wheel is configured to be connected to a driver, the driven wheel is rotatably arranged on the rail frame, the synchronous belt is sleeved on the driving wheel and the driven wheel, the connecting member is connected to the synchronous belt, and the driving wheel is configured to rotate to drive the synchronous belt to move, to drive the mounting assembly to move linearly along the plain shaft.
